# EUROPÄISCHE PATENTSCHRIFT

(11) **EP 0 857 282 B1**
(45) Veröffentlichungstag und Bekanntmachung des Hinweises auf die Patenterteilung: **09.06.1999**
(21) Anmeldenummer: 96945820.7
(22) Anmeldetag: 22.10.1996
(51) Int. Cl.: F24D 3/18, F24D 5/12, F24D 15/04

(54) **VERFAHREN UND EINRICHTUNG ZUM HEIZEN MIT HILFE EINER WÄRMEPUMPE**
METHOD AND DEVICE FOR HEATING BY MEANS OF A HEAT PUMP
PROCEDE ET DISPOSITIF DE CHAUFFAGE PAR MOYEN D'UNE POMPE A CHALEUR

(30) Priorität: 27.10.1995 DE 19540000
(43) Veröffentlichungstag der Anmeldung: 12.08.1998
(73) Patentinhaber: Wintrich, Peter, 23968 Wismar (DE); Mamzed, Jan, 23968 Wismar (DE)
(72) Erfinder: WINTRICH, Peter, 23968 Wismar (DE)
(74) Vertreter: Jaap, Reinhard
(86) Internationale Anmeldenummer: DE9602003
(87) Internationale Veröffentlichungsnummer: WO9715788

(56) Entgegenhaltungen:
- WO-A-81/00442
- DE-A- 3 044 898
- DE-A- 4 203 491
- FR-A- 2 451 548
- FR-A- 2 679 016

## Beschreibung

Die Erfindung betrifft ein Verfahren und eine Einrichtung nach den Oberbegriffen der Ansprüche 1 und 2.

Derartige Heizeinrichtungen sind in den vielfältigsten Variationen bekannt.
Sie bestehen grundsätzlich aus einem Heizkreislauf mit entsprechend verteilt aufgestellten Heizkörpern, einem Kältemittelkreislauf mit einem Verdichter und einem Expansionsventil und einem Luftkreislauf. Dabei stehen der Heizkreislauf mit dem Kältemittelkreislauf und der Kältemittelkreislauf mit dem Luftkreislauf über entsprechende Verdampfer und Kondensatoren miteinander im Wärmeaustausch.
Der Heizkreislauf kann als Warmwasserkreislauf oder als Kondensationskreislauf ausgeführt sein.
Der Luftkreislauf wird von außen mit einer Zuluft gespeist. Da die zur Verfügung stehende Zuluft in der Regel nicht mit einem außreichenden Temperaturniveau und mit der notwendigen Temperaturkonstanz zur Verfügung steht, muß die Temperatur der Zuluft entsprechend angehoben und geregelt werden. Aus energiewirtschaftlichen Gründen wird dazu verstärkt auf die Nutzung von innerhalb der Anlage anfallender Abwärme zurückgegriffen.

So ist es allgemein bekannt und von Vorteil, zum Antrieb der Kompressionswärmepumpe einen Verbrennungsmotor einzusetzen und die Abwärme aus dem Kühlungsprozeß und/oder die Abwärme aus dem Verbrennungsprozeß zur Temperaturregelung der Zuluft einzusetzen. Es ist auch die Nutzung der Abwärme weiterer Wärmequellen bekannt, wie z.B. der Erdwärme.
Eine gattungsgemäße Heizeinrichtung wird in der DE 30 19 968 A1 beschrieben. Hier ist ein mit Zuluft gespeister Strömungskanal vorgesehen, in dem die Abwärme aller vorhandenen und wärmeabgebenden Maschinen und Aggregate und die Abwärme der Abgase aus der Verbrennung aufgefangen, vermischt und im Sammelstrom einem Verdampfer zugeführt wird.
Diese Mischung verschiedener Abwärme führt zwangsläufig dazu, daß die hochtemperierten Abgase energetisch erheblich abgewertet werden, um später im Sammelstrom durch die Wärmepumpe wieder auf ein nutzbares Niveau aufgewertet zu werden. Das verschlechtert den energetischen Wirkungsgrad solcher Einrichtungen erheblich.

Aus der WO-A-81/00442 wurde ein weiteres gattungsgemäßes Verfahren und eine entsprechende Einrichtung zur Nutzbarmachung einer Wärmepumpe für Haushaltsgeräte bekannt. Hierbei erfolgt die Energieversorgung der Haushaltsgeräte durch Wärmetausch einzelner oder aller zur Verfügung stehenden Wärmeströme einer Wärmepumpenanlage. Dazu ist jedes Haushaltsgerät mit mindestens einem Wärmetauscher ausgerüstet.
Auch dieses Verfahren hat den Nachteil einer unzureichenden energetischen Ausbeutung der Wärmeströme.

Es besteht daher die Aufgabe, ein Verfahren und eine entsprechende Einrichtung zu schaffen, bei der eine Abwertung der Temperatur einzelner oder gemeinsamer Abwärmeströme innerhalb des Luftkreises und/oder anderer abwärmeführender Medien weitestgehend vermieden wird.

Diese Aufgabe wird mit den kennzeichnenden Merkmalen der Ansprüche 1 und 2 gelöst.
Zweckdienliche Ausgestaltungen der Einrichtung ergeben sich aus den Ansprüchen 3 bis 12.

Das erfindungsgemäße Verfahren läßt, je nach Ausführung, in Mitteleuropa und beim Einsatz in Wohngebäuden und grundsätzlich monovalentem Betrieb, Jahresheizzahlen von mindestens 2,5 - 4 erwarten. In Verbindung mit dem Einsatz der Primärenergieträger direkt vor Ort ergibt sich eine nach dem heutigen Stand der Technik außerordentliche gute Gesamtbilanz des Energieverbrauchs und der Schadstoffemissionen, da die Kraftwerks- und Übertragungsverluste entfallen, die bei den heute üblichen Elektrowärmepumpen zu berücksichtigen sind. Daraus ergibt sich eine um den Faktor 2 - 3,5 bessere Primärenergieausnutzung als bei heute üblichen Wärmepumpenheizungen.
Ein besonderer Vorteil dieser Einrichtung besteht darin, daß die Wärmepumpe mit hohen Heizzahlen betrieben werden kann und daß sowohl bei den Wärmetauschern im Heizkreis als auch beim mehrstufigen Verdampfer im Kältemittelkreis hohe Temperaturdifferenzen von der Warm- zur Kaltseite der Wärmeüberträger genutzt werden können.
Die Einhaltung der Zulufttemperatur bei ausgeschaltetem Motor wird durch Nutzung der in einem Pufferspeicher des Heizkreises oder im Warmwasserspeicher gespeicherten Wärme für die Zulufterwärmung sichergestellt. Dazu wird der Fortluftventilator abweichend von der sonst üblichen Betriebsweise auch bei ausgeschaltetem Motor weiter betrieben. Hierdurch kann Außenluft und/oder über geeignete Wärmequellen vorgewärmte Luft einem Wärmetauscher zugeführt werden. Die Zuluft nimmt hierbei die für die Raumbelüftung erforderliche Wärme auf. Die benötigte Wärmemenge wird in diesem Fall durch eine Drehzahlregelung des Fortluftventilators geregelt.

Die Erfindung wird an mehreren Ausführungsbeispielen näher erläutert.

Dazu zeigen
- Fig. 1:: eine Kondensationsheizung mit einem Luftkreis, der die Abwärme der Motorkühlung und der Motorverbrennung nutzt,
- Fig. 2:: eine Kondensationsheizung mit einem Luftkreis, der die Abwärme der Motorkühlung, der Motorverbrennung und der Raumlüftung nutzt und
- Fig. 3:: eine Raumluftheizung mit einem Luftkreis, der die Abwärme der Motorkühlung, der Motorverbrennung und der Raumlüftung nutzt.
- Fig. 4:: eine Warmwasserheizung mit einem Luftkreis, der die Abwärme der Motorkühlung und der Motorverbrennung nutzt und
- Fig. 5:: eine Warmwasserheizung mit einem Luftkreis, der die Abwärme der Motorkühlung, der Motorverbrennung und der Raumlüftung nutzt.

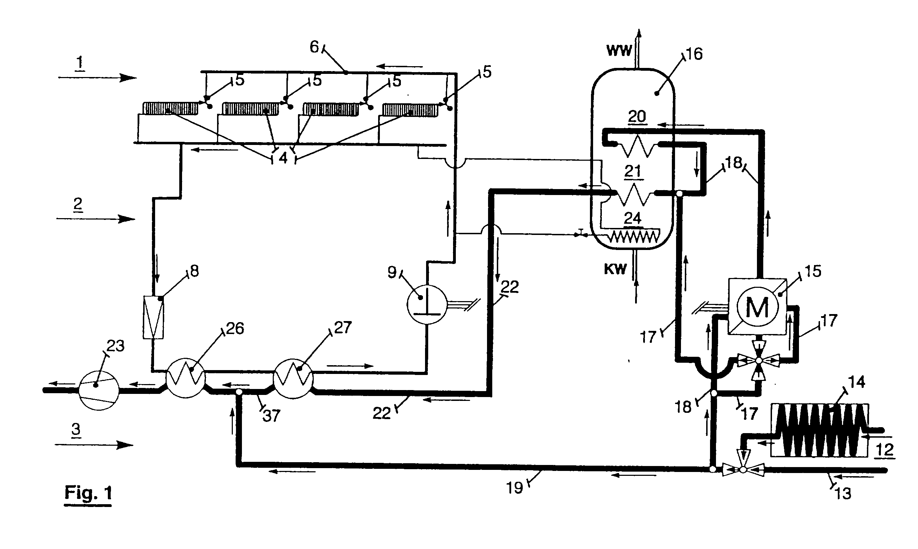

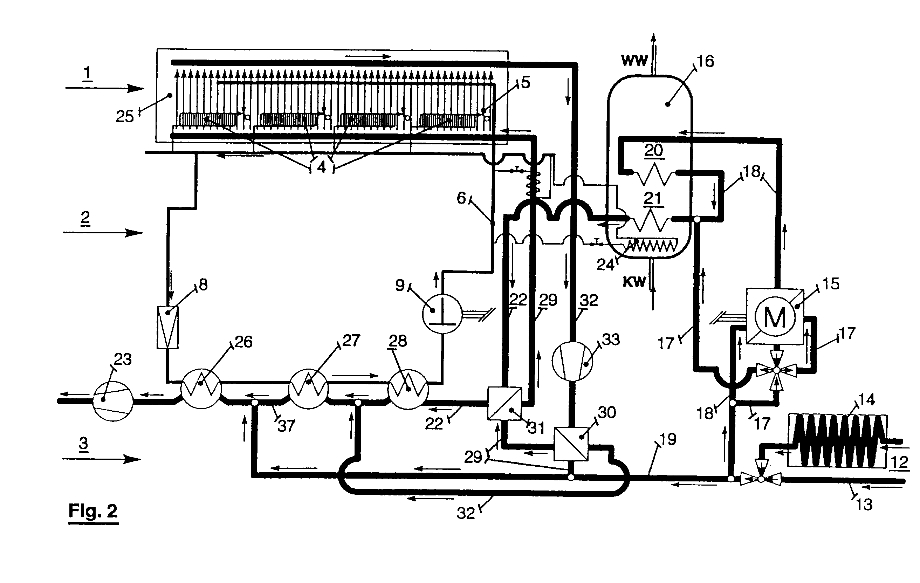

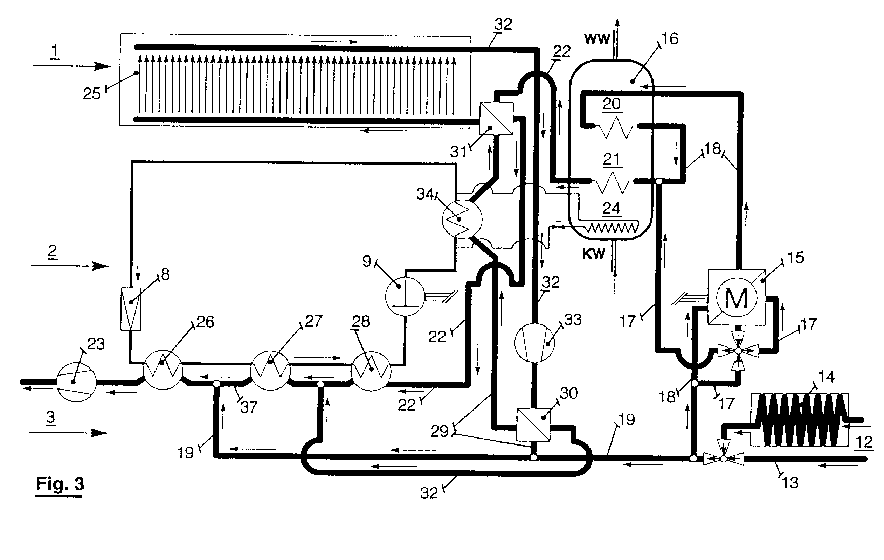

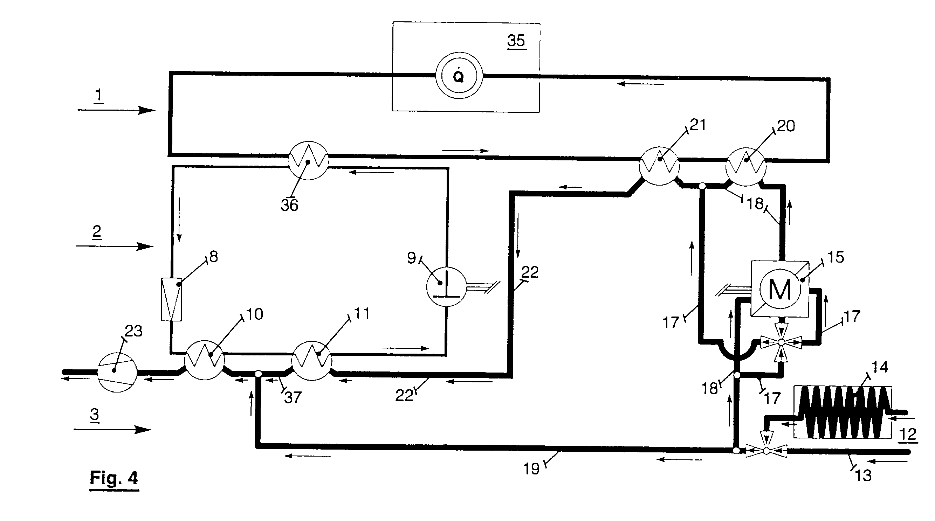

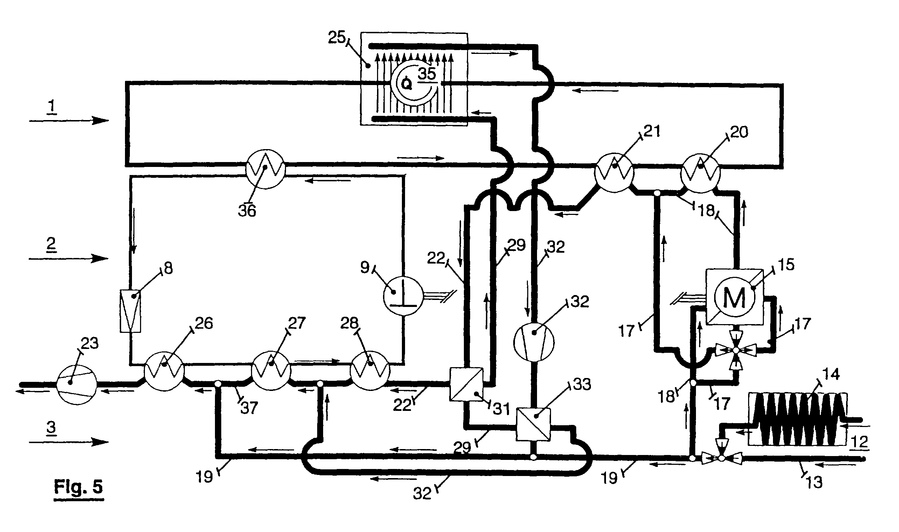

Grundsätzlich besitzen alle Heizeinrichtungen einen Heizkreis 1, der als Kondensationsheizung gemäß der Fig.1, als Luftheizung gemäß der Fig. 3, als kombinierte Kondensations-/Luftheizung gemäß der Fig. 2, als Warmwasserheizung gemäß der Fig. 4 oder als kombinierte Warmwasser-/Luftheizung gemäß der Fig. 5 ausgelegt sein kann.
Weiterhin gehören zu einer gattungsgemäßen Heizeinrichtung ein Kältemittelkreis 2 und ein Luftkreis 3.

Der Heizkreis 1 nach der Fig. 1 besitzt entsprechende Kondensationsheizkörper 4 mit Thermostatreglern 5. Über Leitungen 6 einerseits und Leitungen andererseits ist der Heizkreis 1 mit dem Kältemittelkreis 2 verbunden, der ein Expansionsventil 8 und in Reihe dazu einen antreibbaren Kältemittelverdichter 9 aufweist. Dazwischen befindet sich ein zweistufiger Verdampfer mit einem Verdampfer 10 und einem Überhitzer 11.

Der Luftkreis 3 nach der Fig. 1 besteht im Grunde aus einer Zuluftquelle 12 mit einem kalten Strang 13 und/oder einem warmen Strang 14 sowie aus einem Verbrennungsmotor 15, der mechanisch mit dem Kältemittelverdichter 9 verbunden ist. Im Bedarfsfalle ist noch ein Warmwasserspeicher 16 vorgesehen, der vom Luftkreis 3 mit Wärme versorgt wird. Der Luftkreis 3 teilt sich nach der Zuluftquelle 12 in einen ersten Leitungsstrang 17, der zum Kühlsystem des Verbrennungsmotors 15 führt, in einen zweiten Leitungsstrang 18, der zum Verbrennungsraum des Verbrennungsmotors 15 führt und in einen dritten Leitungsstrang 19, der direkt zum Verdampfer 10 führt. Hinter dem Verbrennungsmotor 15 führt der zweite Strang 18 zu einem ersten Wärmetauscher 20 und einem zweiten Wärmetauscher 21, die beide im Warmwasserspeicher 16 eingebracht sind. Der erste Leitungsstrang 17 führt über den Verbrennungsmotor 15 oder einen Kurzschlußpfad zum zweiten Wärmetauscher 21 des Warmwasserspeichers 16 und mündet vorher in den zweiten Leitungsstrang 18 ein. Nach dem zweiten Wärmetauscher 21 führt ein vierter Leitungsstrang 22 zum zweistufigen Verdampfer.

Der dritte Leitungsstrang 19 und der vierte Leitungsstrang 22 vereinen sich zwischen dem Verdampfer 10 und dem Überhitzer 11 des zweistufigen Verdampfers zu einer Sammelleitung, die über den Verdampfer 10 und einen Fortventilator 23 zur Atmosphäre abgeführt wird. Der Fortluftventilator 23 bildet die Nahtstelle zur freien Atmosphäre. Der Warmwasserspeicher 16 ist weiterhin mit einem zusätzlichen Kondensator 24 ausgerüstet, der mit der Leitung 6 des Kühlmittelkreises 2 verbunden ist.

Der Heizkreis 1 nach der Fig. 2 besitzt zusätzlich einen Raumlüfter 25.

Der Kältemittelkreis 2 nach Fig. 2 ist mit einem dreistufigen Verdampfer, bestehend aus einem Vorwärmer 26, einem Verdampfer 27 und einem Überhitzer 28, ausgerüstet.

Der Luftkreis 3 nach der Fig. 2 besitzt einen zusätzlichen fünften Leitungsstrang 29, der vom dritten Leitungsstrang 19 über einen Wärmetauscher 30 und einen im vierten Leitungsstrang 22 eingebundenen Wärmetauscher 31 zum Raumlüfter 25 führt und einen, vom Raumlüfter 25 zurückführenden sechsten Leitungsstrang 32. Dieser Leitungsstrang 32 wird über einen Lüfter 33, über den Wärmetauscher 30 zum Leitungsstrang 22 geführt und zwischen dem Verdampfer 27 und dem Überhitzer 28 eingemündet.

Der Heizkreis 1 nach der Fig. 3 besteht nur aus den Raumlüfter 25.

Der Kältemittelkreis 2 nach der Fig. 3 besitzt zusätzlich einen Wärmepumpenkondensator 34.

Im Luftkreis 3 nach der Fig. 3 führt der fünfte Leitungsstrang 29 über den Wärmepumpenkondensator 34. Der Wärmetauscher 31 ist anders plaziert und befindet sich in diesem Falle zwischen dem Wärmepumpenkondensator 34 und dem Raumlüfter 25.

Der Heizkreis 1 nach der Fig. 4 besitzt ein oder mehrere Warmwasserheizkörper 35.

Der Kältemittelkreis 2 nach der Fig. 4 ist mit einem zweistufigen Verdampfer mit einem Verdampfer 10 und einem Überhitzer 11 ausgerüstet. Ein Wärmepumpenkondensator 36 koppelt den Heizkreis 1 und den Kältemittelkreis 2.

Im Luftkreis 3 nach der Fig. 4 sind im zweiten Leitungsstrang 18 nach dem Verbrennungsmotor 15 wiederum der Wärmetauscher 20 und im vierten Leitungsstrang 22 der Wärmetauscher 21 angeordnet, die den Luftkreis 3 mit dem Heizkreis 1 funktionell verbinden. Der erste Leitungsstrang 17 mündet hinter dem Verbrennungsmotor 15 zwischen den beiden Wärmetauschern 20 und 21 in den zweiten Leitungsstrang 18 ein.
Dieser Luftkreis 3 entspricht in seinem Aufbau dem Luftkreis 3 aus der Fig. 1, nur das die Wärmetauscher 20 und 21 nicht dem Warmwasserspeicher 16 sondern dem Heizkreis 1 zugeordnet sind.

Der Heizkreis 1 nach der Fig. 5 ist mit einem zusätzlichen Raumlüfter 25 ausgerüstet.

Der Kältemittelkreis 2 nach der Fig. 5 besitzt wiederum einen dreistufigen Verdampfer mit einem Vorwärmer 26, einem Verdampfer 27 und einem Überhitzer 28.

Der Luftkreis 3 nach der Fig. 5 entspricht dem Luftkreis 3 aus der Fig. 2, mit dem Unterschied, daß die Wärmetauscher 20 und 21 nicht dem Warmwasserspeicher 16 sondern wiederum dem Heizkreis 1 zugeordnet sind.

Die Wirkungsweise dieser Einrichtungen zum Heizen von Räumen soll stellvertretend für alle dargestellten und in Analogie möglichen Varianten an Hand des zweiten Ausführungsbeispieles nachweislich der Fig. 4 und 5 beschrieben werden.
An der Zuluftquelle 12 steht entsprechend der Außentemperatur kalte und/oder vorgewärmte Luft zur Verfügung. Diese Außenluft mit ihrem geringen Temperaturniveau wird dem Verbrennungsmotor 15 über einen ersten Leitungsstrang 17 zur Kühlung und über einen zweiten Leitungsstrang 18 zur Verbrennung zugeleitet. Durch die Abwärme des Verbrennungsmotors 15 erhöht sich die Temperatur der Luft im ersten Leitungsstrang 17 auf beispielsweise 80°C. Die Abgase des Verbrennungsmotors besitzen nach dem Ausscheiden im zweiten Leitungsstrang 18 eine Temperatur von z.B. 700° C. Im Wärmetauscher 20 wird den Abgasen eine erhebliche Wärmemenge entzogen und dem Heizkreis 1 zur Aufwertung des Heizungswassers zur Verfügung gestellt. Dabei sinkt die Temperatur der Abgase auf etwa 80° C und es steigt die Temperatur des Heizungswassers z.B von 70°C auf die Höchsttemperatur von 75 °C. In diesem Zustand wird die Luft aus dem ersten Leitungsstrang 17 und die aus dem zweiten Leitungsstrang 18 in den vierten Leitungsstrang 22 überführt. Da beide Luftströme ein etwa gleiches Temperaturniveau besitzen, kommt es zu keiner Auf- oder Abwertung eines einzelnen Luftstromes. Beim Durchströmen des zweiten Wärmetauschers 21 wird der Luft wiederum Wärme entzogen und in das Heizungswasser übertragen. Dadurch verändern sich die Temperaturen der Luft von etwa 80°C auf 70°C und die des Heizungswassers von ca 65°c auf eine Zwischentemperatur von ca 70°C. Die so abgekühlte Luft gelangt nun über den vierten Leitungsstrang 22 zum Verdampfer mit seinem Überhitzer 11. Unter Wärmeentzug des Luftstromes von etwa 70 auf -10°C wird hier das verdampfte Kältemittel im Kältemittelkreis 2 auf eine Höchsttemperatur von ca 30°C angehoben. Danach vermischt sich der Luftstrom aus dem vierten Leitungsstrang 22 mit einem von der Zuluftquelle 12 kommenden Luftstrom aus dem dritten Leitungsstrang 19 zu einem siebenten Leitungsstrang 37. Beide Luftströme weisen wiederum ein annähernd gleiches Temperaturniveau auf, sodaß es zu keiner Auf- oder Abwertung eines einzelnen Luftstromes kommt. Dieser neue Luftstrom durchströmt den Verdampfer 10, wobei wieder Wärme entzogen wird und in dem Verdampfer 10 zur Verdampfung des flüssigen Kältemittels verwendet wird.
Innerhalb des Kältemittelkreises 2 gelangt das gasförmige und auf etwa 30 °C erhitzte Kältemittel zum Kältemittelverdichter 9, der das Kältemittel unter Temperaturzunahme auf etwa 70°C auf den Kondensationsdruck verdichtet und zum Wärmepumpenkondensator 36 fördert. Unter Ausnutzung der Kondensationswärme wird das Heizungswasser auf eine Niedertemperaturstufe von etwa 65 °C erwärmt. Das nunmehr flüssige Kältemittel gelangt zum Expansionsventil 8, wo es vom Kondensationsdruck auf den Verdampfungsdruck entspannt wird. Im Verdampfer 10 wird das flüssige Kältemittel unter Wärmeentzug aus dem Luftstrom vorgewärmt und verdampft.
Die Wirkungsweise der Einrichtung zum Heizen nach der Fig. 5 unterscheidet sich gegenüber der der Fig. 4 einmal dadurch, daß an Stelle des zweistufigen ein dreistufiger Verdampfungsprozeß abläuft, in dem ein Vorwärmer 26, ein Verdampfer 27 und ein Überhitzer 28 eingesetzt werden. Zum Anderen wird der zusätzliche Raumlüfter 25 in den Luftkreis 3 dadurch einbezogen, daß ein zusätzlicher Luftstrom von der Zuluftquelle 12 über einen fünften Leitungsstrang 29 an einem Wärmetauscher 31 erwärmt und als Heizungsluft zur Verfügung gestellt wird und im Rücklauf über einen sechsten Leitungsstrang 32 an einer temperaturgleichen Stelle in den vierten Leitungsstrang 22 eingespeist wird. Dieses erforderliche Temperaturniveau wird durch eine Wärmeabgabe innerhalb des Wärmetauschers 30 erreicht.

### Aufstellung der Bezugszeichen

- 1: Heizkreis
- 2: Kältemittelkreis
- 3: Luftkreis
- 4: Kondensationsheizkörper
- 5: Thermostatregler
- 6: Leitung
- 7: Leitung
- 8: Expansionsventil
- 9: Kältemittelverdichter
- 10: Verdampfer
- 11: Überhitzer
- 12: Zuluftquelle
- 13: kalter Strang
- 14: warmer Strang
- 15: Verbrennungsmotor
- 16: Warmwasserspeicher
- 17: erster Leitungsstrang
- 18: zweiter Leitungsstrang
- 19: dritter Leitungsstrang
- 20: erster Wärmetauscher
- 21: zweiter Wärmetauscher
- 22: vierter Leitungsstrang
- 23: Fortventilator
- 24: Kondensator
- 25: Raumlüfter
- 26: Vorwärmer
- 27: Verdampfer
- 28: Überhitzer
- 29: fünfter Leitungsstrang
- 30: Wärmetauscher
- 31: Wärmetauscher
- 32: sechster Leitungsstrang
- 33: Lüfter
- 34: Wärmepumpenkondensator
- 35: Warmwasserheizkörper
- 36: Wärmepumpenkondensator
- 37: siebenter Leitungsstrang

## Patentansprüche

1. Verfahren zum Heizen mit Hilfe einer Wärmepumpe, bei dem die Energien verschiedener Wärmeströme sowohl durch direkten Wärmeaustausch als auch durch die Wärmepumpe genutzt werden,
**dadurch gekennzeichnet,** daß alle zur Wärmegewinnung geeigneten Wärmeströme zunächst parallel in ein- oder mehrstufigen Wärmetauschern (20, 21, 30, 31) in direkten Wärmeaustausch mit zu beheizenden Medien gebracht werden und anschließend die verbliebene Energie zur Verdampfung des Kältemittels im ein- oder mehrstufigen Wärmepumpenverdampfer (10, 11, 26, 27, 28) genutzt wird, wobei alle verfügbaren Wärmeströme zunächst separat nach ihrer Temperaturlage auf höchstmöglichem Temperaturniveau genutzt und verschiedene Wärmeströme nur auf gleichem oder ähnlichem Temperaturniveau gemischt und der weiteren Nutzung auf dem nächstniedrigeren Temperaturniveau zugeführt werden.

2. Einrichtung zum Heizen mit Hilfe einer Wärmepumpe, bestehend aus einem Heizkreis, einem Kältemittelkreis mit einem motorgetriebenen Verdichter und einem Luftkreis mit mehreren, Abwärmeluft führenden Leitungssträngen, wobei der Heizkreis, der Kältemittelkreis und der Luftkreis miteinander über entsprechende Wärmetauscher, Verdampfer und Kondensatoren im Wärmeaustausch stehen, **dadurch gekennzeichnet,** daß der Verdampfer (10, 11, 26, 27, 28) zwischen dem Luftkreis (3) und dem Kältemittelkreis (2) und die Wärmetauscher (20, 21, 30, 31)) zwischen dem Luftkreis (3) und dem Heizkreis (1) jeweils mehrstufig ausgeführt sind, wobei der Leitungsstrang mit dem jeweils höheren Temperaturniveau zweier Leitungsstränge dem Wärmetauscher oder dem Verdampfer mit der höchstmöglichen niedrigeren Temperaturstufe zugeordnet ist und zwei Leitungsstränge nur bei gleichem oder ähnlichem Temperaturniveau zusammengeführt sind.

3. Einrichtung nach Anspruch 2,
**dadurch gekennzeichnet,** daß der Heizkreis (1) aus einem Warmwasserkreislauf mit einem oder mehreren Warmwasserheizkörpern (35) besteht.

4. Einrichtung nach Anspruch 2,
**dadurch gekennzeichnet,** daß der Heizkreis (1) aus einem Luftkreislauf mit einem oder mehreren Raumlüftern (25) besteht, die über einen fünften Leitungsstrang (29) mit aufgewerteter Warmluft versorgt werden.

5. Einrichtung nach Anspruch 4,
**dadurch gekennzeichnet,** daß die Luft im fünften Leitungsstrang (29) über einen, im Luftkreis (3) befindlichen Wärmetauscher (31) aufgewertet wird.

6. Einrichtung nach Anspruch 4,
**dadurch gekennzeichnet,** daß die Luft im fünften Leitungstrang (29) über den im Luftkreis (3) befindlichen Wärmetauscher (31) und einen, im Kältemittelkreislauf (2) befindlichen Wärmepumpenkondensator (34) aufgewertet wird.

7. Einrichtung nach Anspruch 2,
**dadurch gekennzeichnet,** daß der Heizkreis (1) aus einem Kondensationskreislauf mit einem oder mehreren Kondensationsheizkörpern (4) besteht.

8. Einrichtung nach Anspruch 3,
**dadurch gekennzeichnet,** daß der Verdampfer zwischen dem Luftkreis (3) und dem Kältemittelkreis (2) zweistufig mit einem Verdampfer (10) und einem Überhitzer (11) ausgebildet ist und der Wärmetauscher im Luftkreis (3) dem Heizkreis (1) zugeordnet ist und zweistufig aus einem ersten Wärmetauscher (20) und einem zweiten Wärmetauscher (21) besteht, wobei die Leitungsstränge des Luftkreises (3) in der Art angeordnet sind, daß der zweite Leitungstrang (18) dem ersten Wärmetauscher (20), der aus dem ersten und zweiten Leitungsstrang (17 und 18) entstandene vierte Leitungsstrang (22) dem zweiten Wärmetauscher (21) und dem Überhitzer (11) und der aus dem vierten Leitungsstrang (22) und dem dritten Leitungsstrang (19) gebildete Strang dem Verdampfer (10) zugeteilt sind.

9. Einrichtung nach den Ansprüchen 3 und 5,
**dadurch gekennzeichnet,** daß der Verdampfer zwischen dem Luftkreis (3) und dem Kältemittelkreis (2) dreistufig mit einem Vorwärmer (26), einem Verdampfer (27) und einem Überhitzer (28) ausgebildet ist und der Wärmetauscher im Luftkreis (3) dem Heizkreis (1) zugeordnet ist und zweistufig aus einem ersten Wärmetauscher (20) und einem zweiten Wärmetauscher (21) besteht, wobei die Leitungsstränge des Luftkreises (3) in der Art angeordnet sind, daß der zweite Leitungstrang (18) dem ersten Wärmetauscher (20), der aus dem ersten und zweiten Leitungsstrang (17 und 18) entstandene vierte Leitungsstrang (22) dem zweiten Wärmetauscher (21), dem Wärmetauscher (31) und dem Überhitzer (28), der aus dem vierten Leitungsstrang (22) und dem, die Rückleitung des Raumlüfters (25) darstellende, sechsten Leitungsstrang (32) gebildete siebente Leitungsstrang (37) dem Verdampfer (27) und die aus dem siebenten Leitungsstrang (37) und dem dritten Leitungsstrang (19) gebildete Sammelleitung dem Vorwärmer (26) zugeteilt sind.

10. Einrichtung nach Anspruch 6,
**dadurch gekennzeichnet,** daß der Verdampfer zwischen dem Luftkreis (3) und dem Kältemittelkreis (2) dreistufig mit einem Vorwärmer (26), einem Verdampfer (27) und einem Überhitzer (28) ausgebildet ist, der Wärmetauscher im Luftkreis (3) einem Warmwasserspeicher (16) zugeordnet ist und zweistufig aus einem ersten Wärmetauscher (20) und einem zweiten Wärmetauscher (21) besteht, wobei die Leitungsstränge des Luftkreises (3) in der Art angeordnet sind, daß der zweite Leitungstrang (18) dem ersten Wärmetauscher (20), der aus dem ersten und zweiten Leitungsstrang (17 und 18) entstandene vierte Leitungsstrang (22) dem zweiten Wärmetauscher (21), dem Wärmetauscher (31) und dem Überhitzer (28), der aus dem vierten Leitungsstrang (22) und dem, die Rückleitung des Raumlüfters (25) darstellende, sechsten Leitungsstrang (32) gebildete siebente Leitungsstrang (37) dem Verdampfer (27) und die aus dem siebenten Leitungstrang (37) und dem dritten Leitungsstrang (19) gebildete Sammelleitung dem Vorwärmer (26) zugeteilt sind.

11. Einrichtung nach den Ansprüchen 5 und 7,
dadurch gekennzeichnet,
**dadurch gekennzeichnet,** daß der Verdampfer zwischen dem Luftkreis (3) und dem Kältemittelkreis (2) dreistufig mit einem Vorwärmer (26), einem Verdampfer (27) und einem Überhitzer (28) ausgebildet ist, der Wärmetauscher im Luftkreis (3) einem Warmwasserspeicher (16) zugeordnet ist und zweistufig aus einem ersten Wärmetauscher (20) und einem zweiten Wärmetauscher (21) besteht, wobei die Leitungsstränge des Luftkreises (3) in der Art angeordnet sind, daß der zweite Leitungstrang (18) dem ersten Wärmetauscher (20), der aus dem ersten und zweiten Leitungsstrang (17 und 18) entstandene vierte Leitungsstrang (22) dem zweiten Wärmetauscher (21), dem Wärmetauscher (31) und dem Überhitzer (28), der aus dem vierten Leitungsstrang (22) und dem, die Rückleitung des Raumlüfters (25) darstellende, sechsten Leitungsstrang (32) gebildete siebente Leitungsstrang (37) dem Verdampfer (27) und die aus dem siebenten Leitungstrang (37) und dem dritten Leitungsstrang (19) gebildete Sammelleitung dem Vorwärmer (26) zugeteilt sind.

12. Einrichtung nach Anspruch 7,
**dadurch gekennzeichnet,** daß der Verdampfer zwischen dem Luftkreis (3) und dem Kältemittelkreis (2) zweistufig mit einem Verdampfer (10) und einem Überhitzer (11) ausgebildet ist, der Wärmetauscher im Luftkreis (3) einem Warmwasserspeicher (16) zugeordnet ist und zweistufig aus einem ersten Wärmetauscher (20) und einem zweiten Wärmetauscher (21) besteht, wobei die Leitungsstränge des Luftkreises (3) in der Art angeordnet sind, daß der zweite Leitungstrang (18) dem ersten Wärmetauscher (20), der aus dem ersten und zweiten Leitungsstrang (17 und 18) entstandene vierte Leitungsstrang (22) dem zweiten Wärmetauscher (21) und dem Überhitzer (11) und die aus dem vierten Leitungsstrang (22) und dem dritten Leitungsstrang (19) gebildete Sammelleitung dem Verdampfer (10) zugeteilt sind.

## Claims

1. Method of heating with the aid of a heat pump, whereby the energies of various heat flows are utilized both by means of direct heat exchange and by means of the heat pump,
**characterized in** that all of the heat flows suitable for heat recovery are first brought parallel in single- or multi-stage heat exchangers (20, 21, 30, 31) into direct heat exchange with media to be heated and then the remaining energy is utilized to evaporate the refrigerant in the single- or multi-stage heat pump evaporator (10, 11, 26, 27, 28), wherein all of the available heat flows are initially utilized separately according to their temperature position at the highest possible temperature level and various heat flows are mixed only at an identical or similar temperature level and supplied for further utilization at the next-lower temperature level.

2. Device for heating with the aid of a heat pump, comprising a heating circuit, a refrigerant circuit with a motor-driven compressor and an air circuit having a plurality of line trains carrying waste heat air, wherein the heating circuit, the refrigerant circuit and the air circuit exchange heat with one another via suitable heat exchangers, evaporators and condensers, **characterized in** that the evaporator (10, 11, 26, 27, 28) between the air circuit (3) and the refrigerant circuit (2) and the heat exchangers (20, 21, 30, 31) between the air circuit (3) and the heating circuit (1) are each of a multi-stage design, wherein the line train having the, in each case, higher temperature level of two line trains is associated with the heat exchanger or the evaporator having the highest possible lower degree of temperature and two line trains are brought together only in the event of an identical or similar temperature level.

3. Device according to claim 2,
**characterized in** that the heating circuit (1) comprises a hot-water circuit having one or more hot-water heating elements (35).

4. Device according to claim 2,
**characterized in** that the heating circuit (1) comprises an air circuit having one or more air conditioning fans (25), which are supplied with upgraded hot air through a fifth line train (29).

5. Device according to claim 4,
**characterized in** that the air in the fifth line train (29) is upgraded by means of a heat exchanger (31) situated in the air circuit (3).

6. Device according to claim 4,
**characterized in** that the air in the fifth line train (29) is upgraded by means of the heat exchanger (31) situated in the air circuit (3) and a heat pump condenser (34) situated in the refrigerant circuit (2).

7. Device according to claim 2,
**characterized in** that the heating circuit (1) comprises a condensation circuit having one or more condensation heating elements (4).

8. Device according to claim 3,
**characterized in** that the evaporator between the air circuit (3) and the refrigerant circuit (2) is of a two-stage design comprising an evaporator (10) and a superheater (11), and the heat exchanger in the air circuit (3) is associated with the heating circuit (1) and is of a two-stage design comprising a first heat exchanger (20) and a second heat exchanger (21), wherein the line trains of the air circuit (3) are disposed in such a way that the second line train (18) is assigned to the first heat exchanger (20), the fourth line train (22) formed by the first and second line train (17 and 18) is assigned to the second exchanger (21) and the superheater (11), and the train formed by the fourth line train (22) and the third line train (19) is assigned to the evaporator (10).

9. Device according to claims 3 and 5,
**characterized in** that the evaporator between the air circuit (3) and the refrigerant circuit (2) is of a three-stage design comprising a preheater (26), an evaporator (27) and a superheater (28), and the heat exchanger in the air circuit (3) is associated with the heating circuit (1) and is of a two-stage design comprising a first heat exchanger (20) and a second heat exchanger (21), wherein the line trains of the air circuit (3) are disposed in such a way that the second line train (18) is assigned to the first heat exchanger (20), the fourth line train (22) formed by the first and second line train (17 and 18) is assigned to the second heat exchanger (21), the heat exchanger (31) and the superheater (28), the seventh line train (37) formed by the fourth line train (22) and by the sixth line train (32) representing the return line of the air conditioning fan (25) is assigned to the evaporator (27), and the collecting line formed by the seventh line train (37) and the third line train (19) is assigned to the preheater (26).

10. Device according to claim 6,
**characterized in** that the evaporator between the air circuit (3) and the refrigerant circuit (2) is of a three-stage design comprising a preheater (26), an evaporator (27) and a superheater (28), the heat exchanger in the air circuit (3) is associated with a hot-water tank (16) and is of a two-stage design comprising a first heat exchanger (20) and a second heat exchanger (21), wherein the line trains of the air circuit (3) are disposed in such a way that the second line train (18) is assigned to the first heat exchanger (20), the fourth line train (22) formed by the first and second line train (17 and 18) is assigned to the second heat exchanger (21), the heat exchanger (31) and the superheater (28), the seventh line train (37) formed by the fourth line train (22) and by the sixth line train (32) representing the return line of the air conditioning fan (25) is assigned to the evaporator (27), and the collecting line formed by the seventh line train (37) and the third line train (19) is assigned to the preheater (26).

11. Device according to claims 5 and 7,
**characterized in** that the evaporator between the air circuit (3) and the refrigerant circuit (2) is of a three-stage design comprising a preheater (26), an evaporator (27) and a superheater (28), the heat exchanger in the air circuit (3) is associated with a hot-water tank (16) and is of a two-stage design comprising a first heat exchanger (20) and a second heat exchanger (21), wherein the line trains of the air circuit (3) are disposed in such a way that the second line train (18) is assigned to the first heat exchanger (20), the fourth line train (22) formed by the first and second line train (17 and 18) is assigned to the second heat exchanger (21), the heat exchanger (31) and the superheater (28), the seventh line train (37) formed by the fourth line train (22) and by the sixth line train (32) representing the return line of the air conditioning fan (25) is assigned to the evaporator (27), and the collecting line formed by the seventh line train (37) and the third line train (19) is assigned to the preheater (26).

12. Device according to claim 7,
**characterized in** that the evaporator between the air circuit (3) and the refrigerant circuit (2) is of a two-stage design comprising an evaporator (10) and a superheater (11), the heat exchanger in the air circuit (3) is associated with a hot-water tank (16) and is of a two-stage design comprising a first heat exchanger (20) and a second heat exchanger (21), wherein the line trains of the air circuit (3) are disposed in such a way that the second line train (18) is assigned to the first heat exchanger (20), the fourth line train (22) formed by the first and second line train (17 and 18) is assigned to the second heat exchanger (21) and the superheater (11), and the collecting line formed by the fourth line train (22) and the third line train (19) is assigned to the evaporator (10).

## Revendications

1. Procédé pour chauffer à l'aide d'une pompe à chaleur, dans lequel les énergies des différents flux de chaleur sont utilisés aussi bien à travers des échanges directs de chaleur, qu'à travers la pompe à chaleur,
caractérisé en ce que
tous les flux de chaleur appropriés pour obtenir de la chaleur sont mis tout d'abord en parallèle dans un ou plusieurs échangeurs de chaleur à plusieurs étages (20, 21, 30, 31) en échange direct de chaleur avec des fluides à chauffer, puis l'énergie résiduelle est utilisée pour vaporiser le fluide caloporteur dans un évaporateur de pompe à chaleur à un ou plusieurs étages (10, 11, 26, 27, 28), tous les flux de chaleur disponibles étant tout d'abord utilisés séparément, selon l'état de leur température, au niveau de température le plus élevé possible, et différents flux de chaleur n'étant mélangés qu'au même niveau de température ou à des niveaux de température analogues en étant amenés, pour la suite de leur utilisation, au niveau de température immédiatement inférieur.

2. Dispositif servant à chauffer, à l'aide d'une pompe à chaleur, consistant en un circuit de chauffage, un circuit de fluide caloporteur avec un compresseur entraîné par un moteur et un circuit d'air avec plusieurs lignes de distribution faisant passer l'air ayant perdu de la chaleur, le circuit de chauffage, le circuit de fluide caloporteur et le circuit d'air échangeant de la chaleur entre eux au moyen d'échangeurs de chaleur, de compresseurs et de condenseurs correspondants,
caractérisé en ce que
le compresseur (10, 11, 26, 27, 28) entre le circuit d'air (3) et le circuit de fluide caloporteur (2), et l'échangeur de chaleur (20, 21, 30, 31) entre le circuit d'air (3) et le circuit de chauffage (1), sont respectivement réalisés à plusieurs étages, la ligne de distribution ayant le niveau de température respectivement le plus élevé des deux lignes de distribution, étant associée à l'échangeur de chaleur ou au compresseur ayant l'étage de température plus bas aussi élevé que possible, et les deux lignes de distribution n'étant réunies qu'au même niveau de température ou à des niveaux de température analogues.

3. Dispositif selon la revendication 2,
caractérisé en ce que
le circuit de chauffage (1) consiste en un circuit d'eau chaude avec un ou plusieurs radiateurs (35) à eau chaude.

4. Dispositif selon la revendication 2,
caractérisé en ce que
le circuit de chauffage (1) consiste en un circuit d'air avec un ou plusieurs ventilateurs (25) qui sont alimentés au moyen d'une cinquième ligne de distribution (29) en air chaud revalorisé.

5. Dispositif selon la revendication 4,
caractérisé en ce que
l'air est revalorisé dans la cinquième ligne de distribution (29) au moyen d'un échangeur de chaleur (31) qui se trouve dans le circuit d'air (3).

6. Dispositif selon la revendication 4,
caractérisé en ce que
l'air dans la cinquième ligne de distribution (29) est revalorisé au moyen de l'échangeur de chaleur (31) qui se trouve dans le circuit d'air (3), et d'un condenseur (34) de pompe à chaleur qui se trouve dans le circuit (2) de fluide caloporteur.

7. Dispositif selon la revendication 2,
caractérisé en ce que
le circuit de chauffage (1) consiste en un circuit de condensation avec un ou plusieurs radiateurs (4) de condensation.

8. Dispositif selon la revendication 3,
caractérisé en ce que
l'évaporateur entre le circuit d'air (3) et le circuit de fluide caloporteur (2) est formé en deux étages avec un évaporateur (10) et un surchauffeur (11), l'échangeur de chaleur dans le circuit d'air (3) étant associé au circuit de chauffage (1) et consistant, avec ses deux étages, en un premier échangeur de chaleur (20) et un deuxième échangeur de chaleur (21), les lignes de distribution du circuit d'air (3) étant disposées de telle manière que la seconde ligne de distribution (18) est affectée au premier échangeur de chaleur (20), que la quatrième ligne de distribution (22) qui est issue de la première et de la deuxième ligne de distribution (17 et 18), soit affectée au second échangeur de chaleur (21) et au surchauffeur (11), et que la ligne qui est formée de la quatrième ligne de distribution (22) et de la troisième ligne de distribution (19) est affectée à l'évaporateur (10).

9. Dispositif selon les revendications 3 et 5,
caractérisé en ce que
l'évaporateur entre le circuit d'air (3) et le circuit de fluide caloporteur (2) est constitué en trois étages avec un réchauffeur (26), un évaporateur (27) et un surchauffeur (28), l'échangeur de chaleur dans le circuit d'air (3) étant associé au circuit de chauffage (1) et consistant, avec deux étages, en un premier échangeur de chaleur (20) et en un deuxième échangeur de chaleur (21), les lignes de distribution du circuit d'air (3) étant disposées d'une manière telle que la seconde ligne de distribution (18) est affectée au premier échangeur de chaleur (20), que la quatrième ligne de distribution (22) qui est issue de la première et de la deuxième ligne de distribution (17 et 18) est affectée au deuxième échangeur de chaleur (21), à l'échangeur de chaleur (31) et au surchauffeur (28), la septième ligne de distribution (37), formée à partir de la quatrième ligne de distribution (22) et de la sixième ligne de distribution (32), représentant la ligne de retour du ventilateur (25), étant affectée à l'évaporateur (27), et le collecteur formé de la septième ligne de distribution (37) et de la troisième ligne de distribution (19) étant affecté au réchauffeur (26).

10. Dispositif selon la revendication 6,
caractérisé en ce que
l'évaporateur entre le circuit d'air (3) et le circuit de fluide caloporteur (2) est constitué en trois étages avec un réchauffeur (26), un évaporateur (27) et un surchauffeur (28), l'échangeur de chaleur dans le circuit d'air (3) étant associé à un accumulateur d'eau chaude (16) et consistant, avec deux étages, en un premier échangeur de chaleur (20) et un deuxième échangeur de chaleur (21), les lignes de distribution du circuit d'air (3) étant disposées d'une manière telle que la deuxième ligne de distribution (18) est affectée au premier échangeur de chaleur (20), que la quatrième ligne de distribution (22) qui est issue de la première et de la deuxième ligne de distribution (17 et 18) est affectée au second échangeur de chaleur (21), à l'échangeur de chaleur (31) et au surchauffeur (28), que la septième ligne de distribution (37) formée de la quatrième ligne de distribution (22) et de la sixième ligne de distribution qui constitue la ligne de retour du ventilateur (25), est affectée à l'évaporateur (27), et que le collecteur qui est formé de la septième ligne de distribution (37) et de la troisième ligne de distribution (19), est affecté au réchauffeur (26).

11. Dispositif selon les revendications 5 et 7,
caractérisé en ce que
l'évaporateur entre le circuit d'air (3) et le circuit de fluide caloporteur (2) est affecté, avec trois étages, à un réchauffeur (26), un évaporateur (27) et un surchauffeur (28), l'échangeur de chaleur dans le circuit d'air (3) étant associé à un accumulateur d'eau chaude (16) et consistant avec deux étages en un premier échangeur de chaleur (20) et un deuxième échangeur de chaleur (21), les lignes de distribution du circuit d'air (3) étant disposées d'une manière telle que la deuxième ligne de distribution (18) est affectée au premier échangeur de chaleur (20), que la quatrième ligne de distribution (22) qui est issue de la première et de la deuxième ligne de distribution (17 et 18) est affectée au deuxième échangeur de chaleur (21), à l'échangeur de chaleur (31) et au surchauffeur (28), que la septième ligne de distribution (37) formée à partir de la quatrième ligne de distribution et de la sixième ligne de distribution (32) qui constitue la ligne de retour du ventilateur (25), est affectée à l'évaporateur, et que le collecteur, qui est formé à partir de la septième ligne de distribution (37) et de la troisième ligne de distribution (19), est affecté au réchauffeur (26).

12. Dispositif selon la revendication 7,
caractérisé en ce que
l'évaporateur entre le circuit d'air (3) et le circuit de fluide caloporteur (2) est constitué, avec deux étages d'un évaporateur (10) et d'un surchauffeur (11), l'échangeur de chaleur dans le circuit d'air (3) étant associé à un accumulateur d'eau chaude (16) et consistant, avec deux étages, en un premier échangeur de chaleur (20) et en un deuxième échangeur de chaleur (21), les lignes de distribution du circuit d'air (3) étant disposées d'une manière telle que la deuxième ligne de distribution (18) est affectée au premier échangeur de chaleur (20), que la quatrième ligne de distribution (22) qui est issue de la première ligne de distribution et de la deuxième ligne de distribution (17 et 18), est affectée au deuxième échangeur de chaleur (21) et au surchauffeur (11), et que le collecteur formé à partir de la quatrième ligne de distribution (22) et de la troisième ligne de distribution (19) est affecté à l'évaporateur (10).
